# DEMANDE DE BREVET EUROPEEN

(11) **EP 1 521 388 A1**
(43) Date de publication de la demande: **06.04.2005**
(21) Numéro de dépôt: 04292295.5
(22) Date de dépôt: 24.09.2004
(51) Int. Cl.: H04L 1/08, H04L 12/56, G08B 25/00

(54) **Procédé de transmission de données dans un système de communication du type à répétitions**

(30) Priorité: 30.09.2003 FR 0311464
(71) Demandeur: DELTA DORE Société Anonyme, F-35270 Combourg (FR)
(72) Inventeur: Le Tutour, Jean, 22690 Pleudihen sur Rance (FR)
(74) Mandataire: Maillet, Alain

(57) **Abrégé**

La présente invention concerne un procédé de transmission de données dans un système de communication (1) du type qui comporte une étape de transmission initiale dans laquelle un groupe de données (B_{C} ; B_{L}) est transmis par une unité de communication émettrice (20 ; 30) à une unité de communication réceptrice (10) et une ou plusieurs étapes de re-transmission dans lesquelles le même groupe est à nouveau transmis par ladite unité de communication émettrice à ladite unité de communication réceptrice.

Selon l'invention, il est caractérisé en ce qu'un cycle de transmission (CT) de ladite unité de communication émettrice est divisé en une pluralité **n** de fenêtres de temps (Fᵢ avec i = 1 à **n**) uniformes dont la taille est supérieure au temps de transmission dudit groupe de données (B_{C} ; B_{L}), chacune desdites étapes de transmission et de re-transmission étant exécutée à l'entame d'une fenêtre de temps sélectionnée de manière aléatoire parmi ladite pluralité de fenêtres de temps.

## Description

La présente invention concerne un procédé de transmission de données dans un système de communication à re-transmission. Plus particulièrement, elle concerne un procédé de transmission de groupes de données dans lequel un même groupe de données est transmis plusieurs fois afin de s'assurer que ce groupe de données arrive bien à destination.

Des systèmes de communication sont utilisés dans un grand nombre de domaines. Des systèmes de communication bien connus sont, par exemple, les systèmes téléphoniques tels que les systèmes cellulaires de radiocommunication pour téléphones mobiles. Un autre exemple de système de communication sans fil plus particulièrement visé par la présente invention est un système de radiocommunication pour un système d'alarme centralisé.

Dans de tels systèmes, ainsi qu'il est bien connu, les unités de communication émettent et/ou reçoivent des informations par groupes de données comme, par exemple, des paquets, suivant des protocoles de communication donnés. Le système est généralement organisé en réseau de communication, les unités de communication émettrices et réceptrices étant associées à des noeuds du réseau. Dans un système d'alarme centralisé, le noeud du réseau de radiocommunication est la centrale d'alarme qui, au moyen d'une unité de communication réceptrice, reçoit des paquets provenant au moins de détecteurs et/ou d'une télécommande formant une unité de communication réceptrice. Lorsque les unités de communication émettrices peuvent transmettre à tout moment des paquets au noeud de réseau, il peut arriver que des paquets provenant d'unités émettrices différentes soient reçus en même temps au noeud de réseau de sorte que l'unité réceptrice ne soit pas capable de distinguer les différents paquets incidents. Cet événement, désigné par le terme collision, a comme conséquence qu'aucun des paquets incidents ne peut être pris en compte par le noeud de réseau.

Pour résoudre ce problème, deux approches sont connues dans l'état de la technique. Ces deux approches sont décrites, par exemple, dans la demande de brevet US 2002/0075891 A1 concernant des systèmes cellulaires de radiocommunication pour téléphones mobiles.

Une première approche consiste à imposer des règles d'émission strictes aux différentes unités de communication émettrices du système afin que ces unités n'émettent pas simultanément. Il est alors nécessaire de mettre en oeuvre un moyen de commande supervisant l'émission de ces unités et/ou un échange préliminaire d'informations visant à réserver un temps de transmission à venir pour une unité de communication émettrice donnée. Il y a différents moyens par lesquels un milieu de transmission peut être divisé en parties utilisables simultanément. L'on connaît notamment les techniques d'accès multiple par répartition dans le temps (AMRT) décrites, par exemple, dans la demande de brevet US 2002/0141435 A1 ou dans la demande de brevet US 2002/0075891 A1 précitée concernant des systèmes cellulaires de radiocommunication pour téléphones mobiles. Ces techniques consistent à diviser le temps de transmission sur des bandes de fréquence particulières de manière à obtenir une pluralité de fenêtres de temps et à affecter ces fenêtres de temps à différentes unités de communication émettrices. Dans la technique décrite dans la demande de brevet US 2002/0141435A1 précitée, la majorité des fenêtres de temps de liaison montante sont affectées aux différentes unités de communication émettrices au moyen d'un répéteur. Les fenêtres de temps restantes sont des fenêtres d'accès aléatoires pendant lesquelles toutes les unités de communication sont susceptibles d'émettre. Ces fenêtres d'accès aléatoires sont mises à profit par une unité de communication émettrice pour demander l'affectation d'une fenêtre de temps pour effectuer une transmission. Dans ces fenêtres d'accès aléatoires, plusieurs unités de communication peuvent émettre en même temps, entraînant ainsi un risque de collision.

Une seconde approche consiste à répéter la transmission d'un paquet jusqu'à ce que ce dernier soit reçu. Par exemple, dans la technique connue sous le nom de « ALOHA », lorsqu'une unité de communication émettrice doit envoyer un paquet, elle le fait sans signalisation préalable et attend pendant un laps de temps prédéterminé un accusé de réception de la part de l'unité de communication réceptrice destinataire. Le laps de temps prédéterminé correspond au double du délai de propagation maximum entre deux unités du réseau. Si l'unité de communication émettrice ne reçoit pas d'accusé de réception dans ce laps de temps, elle renouvelle l'opération d'envoi du paquet. Tant qu'un accusé de réception n'est pas reçu, cette opération est renouvelée un nombre prédéterminé de fois. Dans la technique similaire connue sous le nom de « S-ALOHA », utilisée dans la demande de brevet US 2002/0075891 précitée, le temps sur le canal est divisé en fenêtres de temps uniformes dont la taille est égale au temps de transmission de paquet. Les unités de communication émettrices ne peuvent émettre un paquet qu'à l'entame d'une nouvelle fenêtre de temps. Cette disposition permet d'éviter les collisions partielles entre paquets. Dans la demande de brevet US 2002/0141435 précitée, il est prévu que les unités de communication émettrices demandant l'affectation d'une fenêtre de temps pour effectuer une transmission répètent cette demande. Généralement, le délai de répétition pour chaque unité de communication est aléatoire de sorte que, s'il y a eu collision pour les demandes initiales, les demandes répétées n'entrent pas, elles, en collision.

Les techniques qui viennent d'être décrites sont adaptées aux systèmes cellulaires de radiocommunication pour téléphones mobiles. Cependant, elles sont souvent compliquées à mettre en oeuvre du fait qu'elles nécessitent une signalisation plus ou moins complexe et s'adaptent par conséquent mal à des systèmes de radiocommunication tels que ceux utilisés pour un système d'alarme centralisé dans lesquels la plupart des unités de communication émettrices sont des unités qui ne peuvent que transmettre et non recevoir. Elles ne peuvent donc recevoir des signaux de signalisation.

Un but de la présente invention est de proposer un procédé de transmission radio permettant grandement de limiter le risque de collision au niveau d'une unité de communication destinatrice, ce procédé devant être simple à mettre en oeuvre et devant pouvoir être utilisé pour un système de radiocommunication à nombreuses liaisons unidirectionnelles tel qu'un système d'alarme centralisé. On comprendra néanmoins qu'il pourrait également être mis en oeuvre dans un système de radiocommunication à liaisons unidirectionnelles dont il diminuerait quand même la complexité.

A cet effet, la présente invention concerne un procédé de transmission de données dans un système de communication du type qui comporte une étape de transmission initiale dans laquelle un groupe de données est transmis par une unité de communication émettrice à une unité de communication réceptrice et une ou plusieurs étapes de re-transmission dans lesquelles le même groupe est à nouveau transmis par ladite unité de communication émettrice à ladite unité de communication réceptrice.

Il est caractérisé en ce qu'un cycle de transmission de ladite unité de communication émettrice est divisé en une pluralité n de fenêtres de temps uniformes dont la taille est supérieure au temps de transmission dudit groupe de données, chacune desdites étapes de transmission et de re-transmission étant exécutée à l'entame d'une fenêtre de temps sélectionnée de manière aléatoire parmi ladite pluralité de fenêtres de temps.

Selon une autre caractéristique de l'invention, une fenêtre de temps à l'entame de laquelle est exécutée une étape de transmission ou de re-transmission est sélectionnée parmi ladite pluralité de fenêtres de temps au moyen d'une fonction pseudo-aléatoire dont une variable est une information d'identification de ladite unité de communication émettrice.

Selon une autre caractéristique de l'invention, lesdites étapes de transmission comprennent une étape de transmission initiale exécutée à l'entame de la première fenêtre de temps dudit cycle et au moins une étape de re-transmission exécutée à l'entame d'une fenêtre de temps sélectionnée de manière aléatoire parmi ladite pluralité de fenêtres de temps.

Selon une autre caractéristique de l'invention, lesdites étapes de transmission comprennent N étapes de re-transmission exécutées au cours d'un cycle de transmission de ladite unité de communication émettrice, ledit cycle de transmission comporte un nombre M de fenêtres de temps pour les étapes de re-transmission et ledit nombre N d'étapes de re-transmission est strictement inférieur à½M.

Selon une autre caractéristique de l'invention, lesdits groupes de données sont de deux types, un type court de taille très inférieure à la taille desdites fenêtres de temps et un type long de taille proche de la taille desdites fenêtres de temps.

La présente invention concerne également un système de transmission comprenant une unité de communication réceptrice recevant des groupes de données délivrés par une pluralité d'unités de communication émettrices, caractérisé en ce que chaque unité de communication émettrice est prévue pour émettre lesdits groupes de données dans chacune d'au moins deux fenêtres de temps parmi une pluralité n de fenêtres de temps d'un cycle de transmission dont la taille est supérieure au temps de transmission dudit groupe de données, lesdites au moins deux fenêtres de temps étant sélectionnées de manière aléatoire parmi ladite pluralité de fenêtres de temps.

Selon une autre caractéristique de l'invention, chaque unité de communication émettrice est prévue pour émettre lesdits groupes de données à l'entame de la première fenêtre de temps dudit cycle ainsi qu'à l'entame d'au moins une autre fenêtre de temps sélectionnée de manière aléatoire parmi ladite pluralité de fenêtres de temps.

Selon une autre caractéristique de l'invention, chaque unité de communication émettrice comporte une table indiquant sous forme d'un mot toutes les répartitions possibles des fenêtres de temps dans lesquelles lesdits groupes de données peuvent être émis, ladite table étant adressée de manière aléatoire.

Selon une autre caractéristique de l'invention, chaque unité de communication émettrice comporte une table indiquant sous forme d'un mot toutes les répartitions possibles des fenêtres de temps dans lesquelles lesdits groupes de données peuvent être émis, ladite table étant adressée par un identificateur de l'unité de communication émettrice concernée.

La présente invention concerne également une unité de communication émettrice d'un système de transmission prévue pour émettre des groupes de données à une unité de communication réceptrice, caractérisée en ce qu'elle est prévue pour émettre lesdits groupes de données dans chacune d'au moins deux fenêtres de temps parmi une pluralité n de fenêtres de temps d'un cycle de transmission dont la taille est supérieure au temps de transmission dudit groupe de données, lesdites au moins deux fenêtres de temps étant sélectionnées de manière aléatoire parmi ladite pluralité de fenêtres de temps.

Selon une autre caractéristique de l'invention, elle est prévue pour émettre lesdits groupes de données à l'entame de la première fenêtre de temps dudit cycle ainsi qu'à l'entame d'au moins une autre fenêtre de temps sélectionnée de manière aléatoire parmi ladite pluralité de fenêtres de temps.

Selon une autre caractéristique de l'invention, elle comporte une table indiquant sous forme d'un mot toutes les répartitions possibles des fenêtres de temps dans lesquelles lesdits groupes de données peuvent être émis, ladite table étant adressée de manière aléatoire.

Selon une autre caractéristique de l'invention, elle comporte une table indiquant sous forme d'un mot toutes les répartitions possibles des fenêtres de temps dans lesquelles lesdits groupes de données peuvent être émis, ladite table étant adressée par un identificateur de l'unité de communication émettrice concernée.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente de manière schématique un système d'alarme centralisé pour lequel est utilisé un procédé de transmission radio selon la présente invention ; et
la Fig. 2 représente des schémas d'émissions effectuées conformément au procédé de transmission radio selon la présente invention par trois émetteurs du système d'alarme centralisé de la Fig. 1.

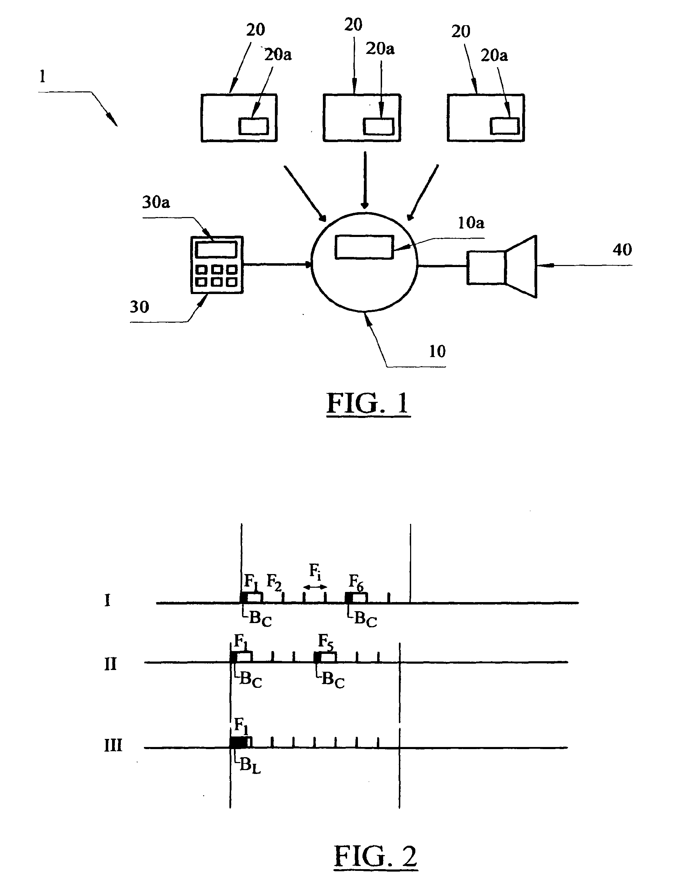

Un procédé de transmission radio selon la présente invention peut s'appliquer à un système d'alarme centralisé tel que celui qui est représenté schématiquement sur la Fig. 1. Bien que la description soit faite en relation avec ce système particulier, on comprendra qu'il pourrait s'appliquer à tout type de systèmes de transmission de données.

En référence à la Fig. 1, un système d'alarme centralisé 1 comprend globalement une centrale d'alarme 10, une pluralité de détecteurs 20, une télécommande 30 et une sirène 40.

Ainsi qu'il est bien connu, les détecteurs 20 peuvent comprendre, par exemple, des détecteurs d'ouverture, des détecteurs de mouvement. Le système d'alarme centralisé peut également comprendre d'autres éléments non représentés comme un transmetteur téléphonique, un clavier de commande et un clavier de report.

Les différents éléments du système d'alarme centralisé 1 communiquent entre eux par exemple par une liaison unidirectionnelle par radio. Plus précisément, les détecteurs 20 et la télécommande 30 comprennent chacun une unité de communication réceptrice 20a, 30a communiquant par exemple via une liaison radio unidirectionnelle avec une unité de communication réceptrice 10a que comporte la centrale d'alarme 10. La liaison entre la sirène 40 et la centrale d'alarme 10 est une liaison bidirectionnelle. C'est également le cas des liaisons avec un éventuel transmetteur téléphonique et/ou un éventuel clavier de report. En revanche, une liaison avec un éventuel clavier de commande serait une liaison unidirectionnelle.

La transmission d'informations entre les unités émettrices 20a, 30a et l'unité réceptrice 10a se fait par groupes de données.

Avantageusement, pour ce faire, les unités de communication émettrices émettent des salves de signaux suivant des protocoles de communication adaptés. Par exemple, selon un mode de réalisation de la présente invention donné à titre indicatif, chaque groupe de données se présente sous forme d'une salve de signaux généralement désignée par le terme "burst" regroupant plusieurs trames structurant les données d'informations. Chaque trame est constituée d'une succession de bits élémentaires organisés en champs logiques et est délimitée par un début de trame et une fin de trame. Un groupe de données regroupe donc plusieurs trames précédées d'un fanion spécifique. Ce groupe de données peut comprendre un nombre variable de trames. Ainsi, on peut distinguer les groupes de données courts et les groupes de données longs selon la quantité d'informations à transmettre.

Un procédé de transmission de données selon la présente invention comporte une étape de transmission initiale dans laquelle un groupe de données est transmis par une unité de communication émettrice 20a, 30a à une unité de communication réceptrice 10a.

La Fig. 2 représente les schémas d'émission en fonction du temps de trois unités de communication réceptrices notées I, II et III, les deux premières étant par exemple associées à des détecteurs 20 et la troisième étant par exemple associée à une télécommande 30. L'unité de communication réceptrice à laquelle sont destinées les informations émises par ces trois unités émettrices I, II et III est le récepteur de la centrale d'alarme 10.

Ainsi qu'on le voit sur la Fig. 2, chacun des cycles de transmission des unités émettrices I, II et III est divisé en **n** fenêtres de temps uniformes Fᵢ (avec i = 1 à **n**, ici n = 8) dont la taille est supérieure à la durée maximum de transmission d'un groupe de données. Les groupes de données Bᵢ sont ici représentés par des rectangles pleins. L'étape de transmission initiale des groupes de données Bᵢ est exécutée à l'entame de la première fenêtre F₁ de temps du cycle.

Ainsi qu'on le voit en comparant les deux premiers schémas d'émission de la Fig. 2, les fenêtres de temps des différentes unités émettrices ne sont pas nécessairement synchrones. Elles sont en revanche de même taille.

Ainsi qu'on le voit sur la Fig. 2, selon le mode de réalisation spécifique représenté, les deux premières unités émettrices I et II, correspondant à des détecteurs 20, émettent des groupes de données B_{C} de type court alors que le troisième émetteur III, correspondant à la télécommande, émet un groupe de données B_{L} de type long. Les groupes de données B_{L} de type long sont prévus pour les systèmes à appuis manuels critiques comme les télécommandes, mais aussi pour les claviers de commande et de report. Ces deux derniers émettent alternativement des groupes de données longs et courts selon le type de données transmises. Par exemple, pour une alerte, ces claviers envoient un groupe de données de type court. En revanche, pour une commande manuelle, ces claviers envoient un groupe de données de type long. Les détecteurs n'émettent que des groupes de type court. Il en va de même pour le transmetteur téléphonique.

En référence aux deux premiers schémas d'émission de la Fig. 2, un procédé de transmission radio selon la présente invention comporte également une ou plusieurs étapes de re-transmission dans lesquelles le même groupe de données de type burst B_{C} ou B_{L} transmis par un émetteur au cours de l'étape de transmission initiale est à nouveau transmis par le même émetteur à destination du récepteur 10 de la centrale.

Selon l'invention, chacune des étapes de transmission ou de re-transmission est exécutée à l'entame d'une fenêtre de temps Fⱼ (avec j étant choisi parmi 2 à **n**, ici **n** = 8) sélectionnée de manière aléatoire parmi l'ensemble des fenêtres de temps d'un cycle de transmission.

Plus spécifiquement, selon un mode avantageux de l'invention, la première transmission d'un groupe de données est effectuée par une unité de communication émettrice à l'entame de la première fenêtre de temps d'un cycle de transmission. Par contre, chacune des étapes de re-transmission est exécutée à l'entame d'une fenêtre de temps Fⱼ (avec j étant choisi parmi 2 à **n**, ici **n** = 8) sélectionnée de manière aléatoire parmi les sept fenêtres de temps restantes du cycle de transmission. C'est ce mode de réalisation spécifique qui est représenté à la Fig. 2.

Ainsi, dans l'exemple représenté sur la Fig. 2, le groupe de données de type B_{C} du premier émetteur I qui est émis à l'entame de la première fenêtre de temps F₁ est émis à nouveau à l'entame de la sixième fenêtre de temps F₆ du cycle de transmission de cet émetteur I. Le groupe de données B_{C} du second émetteur II d'abord émis à l'entame de la première fenêtre de temps F₁ est émis à nouveau à l'entame de la cinquième fenêtre de temps F₅ du cycle de transmission de cet émetteur II. Du fait que la ou les re-transmissions sont exécutées dans des fenêtres de temps choisies aléatoirement, les intervalles de temps entre transmissions initiales et re-transmissions ont de grande chance d'être différents d'un émetteur à l'autre. S'il y a collision entre groupes de données émis en transmission initiale par deux émetteurs, les groupes de données émis en re-transmission par ces deux mêmes émetteurs ont de forte chance de ne pas avoir lieu en même temps.

Selon l'invention, la fenêtre de temps Fⱼ à l'entame de laquelle est exécutée une étape de transmission supplémentaire est sélectionnée parmi les sept fenêtres de temps restantes du cycle de transmission au moyen d'une fonction pseudo-aléatoire dont une variable est une information d'identification de ladite unité de communication émettrice.

Une table regroupe toutes les combinaisons possibles de transmissions supplémentaires pouvant être réalisées à l'intérieur des sept fenêtres de temps disponibles. Cette table est réalisée en fonction du nombre de re-transmissions souhaité.

Avantageusement, la table indique directement la répartition des groupes de données sur les **n** fenêtres du cycle de transmission. Avantageusement, cette répartition est indiquée par un mot de **n** bits dont chaque bit à une valeur prédéterminée, par exemple un, indique l'émission d'un groupe de données de type dans la fenêtre de temps correspondante. Au mot binaire correspondant à chaque combinaison, est associé un nombre hexadécimal correspondant.

Dans le mode de réalisation représenté à la Fig. 2, le bit de poids fort correspond au groupe de données envoyé lors de l'étape de transmission initiale alors que les autres bits correspondent aux étapes de re-transmission.

Pour une unique étape de re-transmission, correspondant à l'exemple représenté sur la Fig. 2, la table de répartition est la suivante:

| Mot indiquant les fenêtres de temps pour l'émission des groupes de données | Valeur en hexadécimale |
|---|---|
| 10000001 | 81 |
| 10000010 | 82 |
| 10000100 | 84 |
| 10001000 | 88 |
| 10010000 | 90 |
| 10100000 | A0 |
| 11000000 | C0 |

Les groupes de données du premier émetteur 1 de la Fig. 2 sont donc émis selon le code 84 alors que les groupes de données du second émetteur II de la Fig. 2 sont émis selon le code 88.

Cette table est adressée par un identificateur de l'émetteur.

Avantageusement, il s'agira de la somme des mots de 4 bits d'un identificateur et d'un type caractérisant ledit émetteur.

Alternativement, elle peut être adressée par une valeur déterminée de manière véritablement aléatoire ou par une combinaison des deux méthodes.

Dans les deux premiers schémas de la Fig. 2, ne sont représentées que des émissions à une seule étape de re-transmission. Toutefois, selon l'invention, N étapes de re-transmission peuvent être exécutées au cours d'un cycle de transmission d'une unité émettrice. Avantageusement, le nombre N d'étapes de re-transmission est strictement inférieur à la moitié du nombre de fenêtres du cycle de transmission. Dans l'exemple représenté sur la Fig. 2, ce nombre N est donc strictement inférieur à 8/2 = 4, le nombre d'étapes de re-transmission exécutées étant alors compris entre zéro et trois.

Le nombre d'étapes de re-transmission est choisi en fonction de l'unité émettrice et du type de données transmises. Lorsqu'il n'y a aucune étape de re-transmission, la probabilité qu'une collision empêche le groupe de données émis d'arriver à destination est la plus forte. C'est lorsque le nombre d'étapes de transmission, comprenant l'étape de transmission et les étapes de re-transmission, est égal à la moitié du nombre total de fenêtres de temps dans un cycle, par exemple 4 pour un nombre total de fenêtres de temps égal à 8, que la probabilité que ce groupe de données n'arrive pas à destination est la plus faible.

Le choix du nombre d'étapes de re-transmission peut être effectué en fonction de l'intervalle de temps séparant deux émissions.

Ainsi qu'on le voit sur la Fig. 2, aucune étape de transmission supplémentaire n'est exécutée par l'unité de communication émettrice associée à la télécommande 30 dont l'émission est représentée par le troisième schéma d'émission III. En effet, pour une commande manuelle comme une télécommande, il est prévu que ce soit l'utilisateur qui actionne à nouveau la télécommande au cas où les données envoyées une première fois ne seraient pas parvenues à destination du fait d'une collision. Constatant que sa commande n'est pas suivie d'effet, l'utilisateur va en effet réactionner la télécommande jusqu'à ce que sa demande aboutisse.

## Revendications

1. Procédé de transmission de données dans un système de communication (1) du type qui comporte une étape de transmission initiale dans laquelle un groupe de données (B_{C} ; B_{L}) est transmis par une unité de communication émettrice (20 ; 30) à une unité de communication réceptrice (10) et une ou plusieurs étapes de re-transmission dans lesquelles le même groupe est à nouveau transmis par ladite unité de communication émettrice à ladite unité de communication réceptrice, **caractérisé en ce qu'**un cycle de transmission (CT) de ladite unité de communication émettrice est divisé en une pluralité **n** de fenêtres de temps (Fᵢ avec i = 1 à **n**) uniformes dont la taille est supérieure au temps de transmission dudit groupe de données (B_{C} ; B_{L}), chacune desdites étapes de transmission et de re-transmission étant exécutée à l'entame d'une fenêtre de temps sélectionnée de manière aléatoire parmi ladite pluralité de fenêtres de temps.

2. Procédé selon la revendication 1, **caractérisé en ce qu'**une fenêtre de temps à l'entame de laquelle est exécutée une étape de transmission ou de re-transmission est sélectionnée parmi ladite pluralité de fenêtres de temps au moyen d'une fonction pseudo-aléatoire dont une variable est une information d'identification de ladite unité de communication émettrice.

3. Procédé de transmission radio selon la revendication 1 ou 2, **caractérisé en ce que** lesdites étapes de transmission comprennent une étape de transmission initiale exécutée à l'entame de la première fenêtre de temps dudit cycle et au moins une étape de re-transmission exécutée à l'entame d'une fenêtre de temps sélectionnée de manière aléatoire parmi ladite pluralité de fenêtres de temps.

4. Procédé selon une des revendications précédentes, **caractérisé en ce que** lesdites étapes de transmission comprennent N étapes de re-transmission exécutées au cours d'un cycle de transmission de ladite unité de communication émettrice (20, 30), **en ce que** ledit cycle de transmission comporte un nombre M de fenêtres de temps pour les étapes de re-transmission et **en ce que** ledit nombre N d'étapes de re-transmission est strictement inférieur à ½M.

5. Procédé selon l'une quelconque des revendications précédentes, **caractérisé en ce que** lesdits groupes de données sont de deux types, un type court de taille très inférieure à la taille desdites fenêtres de temps et un type long de taille proche de la taille desdites fenêtres de temps.

6. Système de transmission comprenant une unité de communication réceptrice (10) recevant des groupes de données (B) délivrés par une pluralité d'unités de communication émettrices (20a ; 30a), **caractérisé en ce que** chaque unité de communication émettrice (20a , 30a) est prévue pour émettre lesdits groupes de données (B) dans chacune d'au moins deux fenêtres de temps parmi une pluralité **n** de fenêtres de temps (Fᵢ avec i = 1 à **n**) d'un cycle de transmission dont la taille est supérieure au temps de transmission dudit groupe de données (B_{C} ; B_{L}), lesdites au moins deux fenêtres de temps étant sélectionnées de manière aléatoire parmi ladite pluralité de fenêtres de temps.

7. Système de transmission selon la revendication 6, **caractérisé en ce que** chaque unité de communication émettrice (20a , 30a) est prévue pour émettre lesdits groupes de données (B) à l'entame de la première fenêtre de temps dudit cycle ainsi qu'à l'entame d'au moins une autre fenêtre de temps sélectionnée de manière aléatoire parmi ladite pluralité de fenêtres de temps.

8. Système de transmission selon la revendication 6 ou 7, **caractérisé en ce que** chaque unité de communication émettrice (20a, 30a) comporte une table indiquant sous forme d'un mot toutes les répartitions possibles des fenêtres de temps dans lesquelles lesdits groupes de données peuvent être émis, ladite table étant adressée de manière aléatoire.

9. Système de transmission selon une des revendications 6 à 8, **caractérisé en ce que** chaque unité de communication émettrice (20a, 30a) comporte une table indiquant sous forme d'un mot toutes les répartitions possibles des fenêtres de temps dans lesquelles lesdits groupes de données peuvent être émis, ladite table étant adressée par un identificateur de l'unité de communication émettrice concernée.

10. Système de communication selon une des revendications 6 à 9, **caractérisé en ce qu'**il est un système d'alarme centralisé comportant au moins un détecteur (20) et/ou une télécommande (30) comportant une unité de communication émettrice (20a, 30a) et une centrale d'alarme (10) incorporant une unité de communication réceptrice (10a).

11. Unité de communication émettrice d'un système de transmission prévue pour émettre des groupes de données (B) à une unité de communication réceptrice (10), **caractérisée en ce qu'**elle est prévue pour émettre lesdits groupes de données (B) dans chacune d'au moins deux fenêtres de temps parmi une pluralité **n** de fenêtres de temps (Fᵢ avec i = 1 à **n**) d'un cycle de transmission dont la taille est supérieure au temps de transmission dudit groupe de données (B_{C} ; B_{L}), lesdites au moins deux fenêtres de temps étant sélectionnées de manière aléatoire parmi ladite pluralité de fenêtres de temps.

12. Unité de communication émettrice selon la revendication 11, **caractérisée en ce qu'**elle est prévue pour émettre lesdits groupes de données (B) à l'entame de la première fenêtre de temps dudit cycle ainsi qu'à l'entame d'au moins une autre fenêtre de temps sélectionnée de manière aléatoire parmi ladite pluralité de fenêtres de temps.

13. Unité de communication émettrice selon la revendication 11 ou 12, **caractérisée en ce que** chaque unité de communication émettrice (20a, 30a) comporte une table indiquant sous forme d'un mot toutes les répartitions possibles des fenêtres de temps dans lesquelles lesdits groupes de données peuvent être émis, ladite table étant adressée de manière aléatoire.

14. Unité de communication émettrice selon une des revendications 11 à 13, **caractérisée en ce qu'**elle comporte une table indiquant sous forme d'un mot toutes les répartitions possibles des fenêtres de temps dans lesquelles lesdits groupes de données peuvent être émis, ladite table étant adressée par un identificateur de l'unité de communication émettrice concernée.

15. Unité de communication émettrice selon une des revendications 11 à 14, **caractérisée en ce qu'**elle est incluse dans un détecteur (20) ou dans une télécommande (30) d'un système d'alarme centralisé.
